# EUROPÄISCHE PATENTSCHRIFT

(11) **EP 3 213 975 B1**
(45) Veröffentlichungstag und Bekanntmachung des Hinweises auf die Patenterteilung: **22.04.2020**
(21) Anmeldenummer: 17152654.4
(22) Anmeldetag: 23.01.2017
(51) Int. Cl.: B62B 3/00

(54) **KUNSTSTOFFBODEN**
PLASTIC BOTTOM
PLANCHER EN PLASTIQUE

(30) Priorität: 01.03.2016 DE 202016101100 U
(43) Veröffentlichungstag der Anmeldung: 06.09.2017
(73) Patentinhaber: FEIL GmbH, 33142 Büren (DE)
(72) Erfinder: JOSTKLEIGREWE, Heinrich, 33442 Herzebrock-Clarholz (DE)
(74) Vertreter: Nunnenkamp, Jörg

(56) Entgegenhaltungen:
- EP-B1- 0 226 505
- DE-C2- 19 709 689
- US-A- 5 868 080

## Beschreibung

Die Erfindung betrifft einen Kunststoffboden für Rollwagen, insbesondere Einlegeboden für Rollcontainer mit Bodentraggestell, mit zumindest einem Stecckanal zur Führung und Halterung einer wahlweise aufnehmbaren Verstärkungsschiene, wobei der Steckkanal einseitig geschlossen mit einer Einführöffnung sowie zumindest einem in Einführrichtung der Verstärkungsschiene angeordneten Klemmvorsprung für die Verstärkungsschiene ausgebildet ist.

Kunststoffböden für Rollwagen werden typischerweise für Transport- oder Lagerzwecke eingesetzt. So können Rollwagen in der Industrie dazu dienen, beispielsweise in Aufnahmebehältern vorhandene Einzelteile an einen Arbeitsplatz zur Montage zu befördern.

Demgegenüber werden Rollcontainer mit Bodentraggestell überwiegend von Handelshäusern eingesetzt, beispielsweise zum Transport und für die Beförderung von Lebensmitteln. Dabei sind die an dieser Stelle eingesetzten Kunststoffböden mit dem generellen Vorteil ausgerüstet, dass sie leicht zu reinigen sind. Dadurch lassen sich etwaige hygienische Anforderungen problemlos erfüllen.

Da sowohl Rollwagen als auch Rollcontainer auf dem betreffenden Kunststoffboden erhebliche Lasten aufnehmen oder aufnehmen müssen, werden in der Praxis Verstärkungsschienen zur Stabilisierung eingesetzt. Dadurch kann die Traglast solcher Kunststoffböden im Vergleich zu Kunststoffböden ohne zusätzliche Verstärkungsschienen deutlich gesteigert werden. Beispielsweise lassen sich Traglasten von mehr als 100 kg und sogar bis zu 150 kg oder noch mehr realisieren.

Ein Kunststoffboden für Rollwagen wird beispielsweise in der österreichischen Veröffentlichung E 44 268 B als Übersetzung der Patentschrift EP 0 226 505 B1 beschrieben. Hier geht es um eine verstärkte Ladepalette aus Kunststoffguss, die mit zwei übereinander angeordneten komplementären sowie im Wesentlichen rechteckigen Platten ausgerüstet ist. Jede der Platten weist ein starres Gerippe mit Verbindungstraversen und Verstärkungsholmen auf. Bei den Verstärkungsholmen handelt es sich um Metallrohre. Die Metallrohre bzw. Verstärkungsholme werden in einer bestimmten Reihenfolge in Durchgänge eingeführt. Außerdem verriegeln sich einzelne Verstärkungsholme an ihren Berührungspunkten. Zu diesem Zweck sind die Verstärkungsholme an ihren Berührungspunkten mit für die Verriegelung zusammenwirkenden Querschnitten wie beispielsweise Absätzen ausgerüstet.

Der bekannte Kunststoffboden mag zwar über die nötige Stabilität verfügen, ist jedoch von seinem Aufbau her kompliziert und dementsprechend teuer. Außerdem führt die gegenseitige Verriegelung der Verstärkungsholme dazu, dass einzelne Verstärkungsholme bei Bedarf im Regelfall nicht (mehr) aus den Durchgängen entfernt werden können, jedenfalls nicht ohne sie zu zerstören.

Bei einem anderen Kunststoffboden entsprechend der DE 197 09 689 C2 wird ein im Vergleich zu der E 44 268 B deutlich einfacherer Aufbau propagiert. Denn hier sind Steckkanäle zur Führung und Halterung der wahlweise aufnehmbaren Verstärkungsschienen vorgesehen. Die einzelnen Steckkanäle werden jeweils endseitig mit sogenannten Klipsen verschlossen, um ein Herausfallen der Verstärkungsschiene aus dem Steckkanal zu verhindern. Auch diese Variante ist nicht frei von Nachteilen. So handelt es sich bei den Klipsen um separate Bauteile, die zusätzlich zu dem an sich benötigten Kunststoffboden hergestellt, bevorratet und angebracht werden müssen. Hinzu kommt, dass die Klipse in der Praxis und beim rauen Einsatz abscheren können, abgerissen werden können etc.. Dadurch besteht die Gefahr, dass die an sich im Steckkanal aufgenommene Verstärkungsschiene aus dem Steckkanal unkontrolliert herausrutscht. Dadurch besteht Unfallgefahr für mit den betreffenden Kunststoffböden bzw. Rollcontainern arbeitende Bedienpersonen. Hier will die Erfindung insgesamt Abhilfe schaffen.

Im gattungsbildenden Stand der Technik nach der US 5,868,080 sind einzelne Klemmvorsprünge im jeweiligen Steckkanal realisiert, die als "shaped fins" bezeichnet werden. Diese geformten Rippen sorgen praktisch allein dafür, dass die jeweilige Verstärkungsschiene im Steckkanal gehalten wird. Dadurch ist ein wahlweiser Ein- und Ausbau der Verstärkungsschiene schwierig.

Der Erfindung liegt das technische Problem zugrunde, einen derartigen Kunststoffboden so weiter zu entwickeln, dass die Herstellung und Montage vereinfacht sind und etwaige Gesundheitsgefährdungen des Bedienpersonals ausgeschlossen werden können.

Zur Lösung dieser technischen Problemstellung ist ein gattungsgemäßer Kunststoffboden für Rollwagen im Rahmen der Erfindung dadurch gekennzeichnet, dass die Einführöffnung benachbart zu einem Endanschlag für die im Steckkanal aufgenommene Verstärkungsschiene angeordnet ist.

Tatsächlich erfüllt bereits (ein) einziger Klemmvorsprung die Anforderung, nämlich die Verstärkungsschiene sicher im Innern des Steckkanals zu halten. Im Regelfall sind jedoch mehrere Klemmvorsprünge in dem betreffenden Stecckanal realisiert. Dabei hat sich eine Variante als besonders vorteilhaft erwiesen, bei welcher jeweils Klemmvorsprünge über die gesamte Länge des Steckkanals realisiert werden. Die Klemmvorsprünge können in diesem Fall mit gleichbleibendem Abstand verteilt über die Länge des Steckkanals in dem Steckkanal vorgesehen werden. Eine solche Ausführungsform mit mehreren Klemmvorsprüngen ist mit dem besonderen Vorteil ausgerüstet, dass die Verstärkungsschiene nicht nur einwandfrei im Steckkanal fixiert wird, sondern auch ein etwaiges Klappern der Verstärkungsschiene im Betrieb vermieden wird.

Dabei wird im Regelfall so gearbeitet, dass der Steckkanal eine Breite aufweist, welche eine Materialstärke der Verstärkungsschiene übersteigt. Dadurch wird die Verstärkungsschiene an sich lose im Steckkanal aufgenommen. Tatsächlich entspricht die Breite des Steckkanals in etwa dem Doppelten oder geringfügig mehr im Vergleich zu der Materialstärke der Verstärkungsschiene. Demgegenüber weist die Einführöffnung eine an die Materialstärke der Verstärkungsschiene angepasste Breite auf. Das heißt, während die Einführöffnung von ihrer Breite her der Materialstärke der Verstärkungsschiene entspricht, verfügt der sich gleichsam öffnende und sich hinter der Einführöffnung in der Einführrichtung der Verstärkungsschiene erstreckende Steckkanal über eine Breite, die in etwa dem Doppelten oder sogar noch geringfügig mehr der Materialstärke der Verstärkungsschiene entspricht.

Diese Auslegung korrespondiert erfindungsgemäß dazu, dass die Einführöffnung benachbart zu dem Endanschlag für die im Steckkanal aufgenommene Verstärkungsschiene angeordnet ist. Im eingebauten Zustand der Verstärkungsschiene in den Steckkanal liegt die Verstärkungsschiene an dem betreffenden Endanschlag an. Da der Steckkanal darüber hinaus einseitig geschlossen ist, kann die Verstärkungsschiene in diesem Zustand nicht unbeabsichtigt aus dem Steckkanal entweichen. Das alles gelingt, ohne dass zusätzliche Bauteile wie die Klipse nach dem Stand der Technik erforderlich wären.

Tatsächlich ist die Auslegung vorteilhaft so getroffen, dass sich der in der Einführrichtung der Verstärkungsschiene angeordnete Klemmvorsprung oder die mehreren in der Einführrichtung der Verstärkungsschiene vorgesehenen Klemmvorsprünge und die Einführöffnung beim Blick in die Einführrichtung wenigstens größtenteils überdecken. Sobald also die Verstärkungsschiene in die Einführöffnung eingesteckt wird, trifft sie in der Einführrichtung nach Absolvieren eines bestimmten Steckweges auf den Klemmvorsprung bzw. auf die Klemmvorsprünge. Da der jeweilige Klemmvorsprung vorteilhaft den Steckkanal in etwa hälftig verengt, erklärt sich die Besonderheit, dass sich nämlich der zumindest eine Klemmvorsprung und die Einführöffnung beim Blick in die Einführrichtung wenigstens größtenteils überdecken.

Damit nun die in der Einführrichtung auf den oder den ersten Klemmvorsprung auftreffende Verstärkungsschiene den Klemmvorsprung passieren kann, verfügt der betreffende Klemmvorsprung vorteilhaft über eine Auflaufschräge für die Verstärkungsschiene. Als Folge hiervon wird die Verstärkungsschiene beim Auflaufen und Passieren des Klemmvorsprunges geringfügig elastisch verformt und trifft auf einen dem Klemmvorsprung gegenüberliegenden Rand des Stecckanals. Die Auslegung ist dabei insgesamt so getroffen, dass die Auflaufschräge und der bis zum Auftreffen der Verstärkungsschiene auf den Klemmvorsprung absolvierte Steckweg das Einstecken der Verstärkungsschiene in den Steckkanal zulassen, wobei eine geringfügige elastische Verformung der Verstärkungsschiene ausdrücklich in Kauf genommen wird.

Sobald die Verstärkungsschiene vollständig im Steckkanal aufgenommen ist und an einer Endwand des einseitig geschlossenen Steckkanals anliegt, hintergreift die Verstärkungsschiene elastisch auffedernd den benachbart zu der Einführöffnung angeordneten Endanschlag. Die Verstärkungsschiene wird jetzt nicht (mehr) verformt, weder elastisch und erst recht nicht plastisch. Denn sie wird jetzt in einem Spalt zwischen dem Klemmvorsprung einerseits und der gegenüberliegenden Wand des Steckkanals andererseits aufgenommen. In dieser eingebauten Position sorgen die Endwand und der zu der Einführöffnung benachbarte Endanschlag dafür, dass die Verstärkungsschiene den Steckkanal nicht unbeabsichtigt verlassen kann. Vielmehr muss die Verstärkungsschiene erneut elastisch verformt werden, um sie aus dem Steckkanal wieder entfernen zu können. Tatsächlich ist es hierzu erforderlich, die Verstärkungsschiene vom Endanschlag ausgehend in Richtung auf die benachbarte Einführöffnung zu verformen und dann aus der Einführöffnung herauszuziehen. Das ist problemlos möglich, weil der Klemmvorsprung wie der gesamte Boden aus Kunststoff hergestellt ist und zwischen dem fraglichen Kunststoff bzw. dem Kunststoffboden und folglich auch dem Steckkanal sowie der Verstärkungsschiene geringe Reibungszahlen beobachtet werden, die typischerweise zur Gleitreibung zwischen beispielsweise Stahl und Kunststoff korrespondieren.

Auf diese Weise wird im Rahmen der Erfindung ein Kunststoffboden für Rollwagen zur Verfügung gestellt, der durch den Rückgriff auf Kunststoffe zunächst einmal für den Einsatz in Verbindung mit dem Transport und der Lagerung von Lebensmittel besonders prädestiniert ist. Durch die wahlweise anbringbaren Verstärkungsschienen im Kunststoffboden kann seine Traglast gegenüber Kunststoffböden ohne solche Verstärkungsschienen signifikant gesteigert werden. Da die jeweilige Verstärkungsschiene im Steckkanal nicht nur wahlweise aufgenommen werden kann, sondern zur Sicherung der Verstärkungsschiene im Steckkanal keine zusätzlichen Bauteile wie beispielsweise Klipse erforderlich sind, ist die Montage und auch die Fertigung deutlich gegenüber dem Stand der Technik erleichtert.

Hinzu kommt, dass die spezielle Lagerung der Verstärkungsschiene im Innern des Steckkanals und ihre zwangsweise elastische Verformung beim Einführen und die Einnahme der eingebauten Position durch Zurückfedern der Verstärkungsschiene im Steckkanal für einen einwandfreien Halt der Verstärkungsschiene im Steckkanal sorgt. Es besteht also im Gegensatz zum Stand der Technik nicht (mehr) die Gefahr, dass die Verstärkungsschiene unbeabsichtigt aus dem Steckkanal herausrutscht. Dadurch sind etwaige Verletzungen von Bedienpersonen von vornherein ausgeschlossen. Diese sämtlichen Vorteile werden in Verbindung mit einem einfachen und leichten Aufbau des Kunststoffbodens erreicht, so dass besondere Kostenvorteile beobachtet werden.

Nach weiterer vorteilhafter Ausgestaltung verfügt der erfindungsgemäße Kunststoffboden randseitig über Traglaschen sowie Einformungen. Die Traglaschen sind dabei jeweils in kanalseitiger Verlängerung des zugehörigen Steckkanals angeordnet. Dadurch sorgen die Steckkanäle bzw. die in den Steckkanälen aufgenommenen Verstärkungsschienen zugleich für eine Verstärkung der Traglaschen. Dies gilt umso mehr für eine Variante der Erfindung, bei welcher der Kunststoffboden sowohl mit Laschenstreben als auch Verstärkungsstreben ausgerüstet ist, die jeweils Öffnungen umschließen. Die Laschenstreben und die Verstärkungsstreben erstrecken sich jeweils von einem Rand bis zum anderen Rand des Kunststoffbodens und sind zueinander typischerweise rechtwinklig angeordnet.

Die Laschenstreben verbinden dabei jeweils die an gegenüberliegenden Rändern angeordneten Traglaschen. Außerdem weisen die Laschenstreben jeweils einen Steckkanal auf. Da der Kunststoffboden im Regelfall mit den Traglaschen auf Querstreben des Bodentraggestells aufliegt, werden diese Auflageflächen durch die die Traglaschen verbindenden Laschenstreben und die in den Laschenstreben vorgesehenen Steckkanäle mit den darin einbringbaren Verstärkungsschienen besonders verstärkt und für eine einwandfreie Krafteinleitung genutzt. Die demgegenüber zwischen den jeweils randseitigen Traglaschen vorgesehenen Einformungen dienen zur Aufnahme von Vertikalstreben beispielsweise des Bodentraggestells.

Der Steckkanal zur wahlweisen Aufnahme der Verstärkungsschiene ist im Allgemeinen im Querschnitt U-förmig mit zwei sich gegenüberliegenden U-Schenkeln ausgebildet. Außerdem verfügt der Steckkanal über eine unterseitige U-Basis. Die beiden U-Schenkel werden im Allgemeinen durch oberseitig die beiden U-Schenkel verbindende Brückenstege miteinander gekoppelt. Die Brückenstege sorgen zugleich dafür, dass die Verstärkungsschiene im nach oben hin offenen Steckkanal verbleibt und nicht aus dem Steckkanal herausfallen kann. Zugleich sorgen die Brückenstege in Verbindung mit zwischen den Brückenstegen vorgesehenen Freibereichen dafür, dass ein Bediener unmittelbar beim Betrachten des betreffenden Steckkanals erkennen kann, ob dieser mit Hilfe einer Verstärkungsschiene ausgerüstet ist oder nicht. Dadurch lässt sich unmittelbar erkennen, ob der fragliche Kunststoffboden für die gewünschte Last ausgelegt ist oder vielmehr ein oder mehrere zusätzliche Verstärkungsschienen in die betreffenden Steckkanäle eingesteckt werden müssen.

Der Kunststoffboden ist insgesamt als Spritzgießteil ausgebildet, kann folglich in großer Stückzahl und zu einem niedrigeren Preis hergestellt werden. Hierzu trägt ergänzend der Umstand bei, dass zu seiner Herstellung im Regelfall ein thermoplastischer Kunststoff wie beispielsweise Polyethylen (PE) und/oder Polypropylen (PP) eingesetzt wird. Selbstverständlich können auch andere thermoplastische Kunststoffe an dieser Stelle genutzt und für die Herstellung des Kunststoffbodens durch Spritzgießen eingesetzt werden.

Im Ergebnis wird ein Kunststoffboden zur Verfügung gestellt, der einfach und durch die Öffnungen materialsparend ausgelegt ist. In diese Richtung zielen auch die weiteren Erfindungsmaßnahmen, wonach zusätzliche Klipse zum Verschließen des einen oder der mehreren Steckkanäle ausdrücklich entbehrlich sind. Dadurch ist die Montage der einzelnen Verstärkungsschienen vereinfacht. Schließlich wird hierdurch ein deutlicher Sicherheitsgewinn beobachtet, weil die jeweilige Verstärkungsschiene im Steckkanal gleichsam auffedernd rastend gehalten wird und nicht unbeabsichtigt aus dem Steckkanal herausrutschen kann. Das gilt selbst dann, wenn der Kunststoffboden randseitig im Bereich des Steckkanals beschädigt wird. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: den erfindungsgemäßen Kunststoffboden im Zusammenhang mit einem Rollcontainer,
- Fig. 2: den Kunststoffboden in einer Gesamtansicht von oben,
- Fig. 3: ein Detail aus der Fig. 2 im Bereich A nach der Fig. 2 und
- Fig. 4: ein Detail aus der Fig. 2 im Bereich B.

In den Figuren ist ein Kunststoffboden für einen Rollwagen 1 dargestellt. Bei dem fraglichen Kunststoffboden handelt es sich im Ausführungsbeispiel und nicht einschränkend um einen Einlegeboden 2 für einen Rollcontainer mit Bodentraggestell 3. Das heißt, der Rollwagen 1 ist im Rahmen des gezeigten Beispiels als Rollcontainer mit Bodentraggestell 3 ausgebildet, was selbstverständlich nur beispielhaft und nicht einschränkend gilt. Denn grundsätzlich könnte der Rollwagen 1 auch als Rollpalette ausgelegt sein, das heißt ohne das fragliche Bodentraggestell 3.

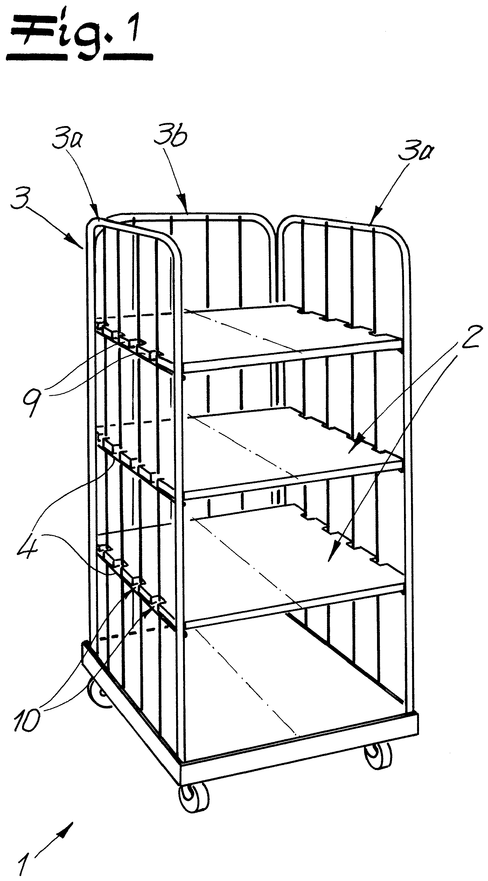

Man erkennt, dass im Rahmen der Fig. 1 fußseitig des Bodentraggestells 3 ein Basisboden und darüber mehrere Einlegeböden 2 realisiert sind. Der Basisboden wird in einem Rahmen mit unterseitigen Rollen aufgenommen, vom welchem aus sich das Bodentraggestell 3 vertikal nach oben erstreckt. Grundsätzlich kann der fragliche Kunststoffboden bzw. Einlegeboden 2 aber auch nicht nur wie dargestellt als Zwischenboden ausgebildet sein, sondern auch die Funktion des Basisbodens übernehmen, was jedoch nicht gezeigt wird.

Das Bodentraggestell 3 ist vorliegend als Wandgestell aus Gitterwänden ausgebildet. Tatsächlich sind zwei Seitenwände 3a bzw. Seitengitterwände sowie eine Rückwand 3b bzw. Rückseitengitterwand vorgesehen. Das fragliche Bodentraggestell 3 verfügt darüber hinaus über Querstangen bzw. Querstreben 4, auf welche die als Zwischenboden ausgelegten Einlegeböden 2 im Beispielfall aufgelegt werden.

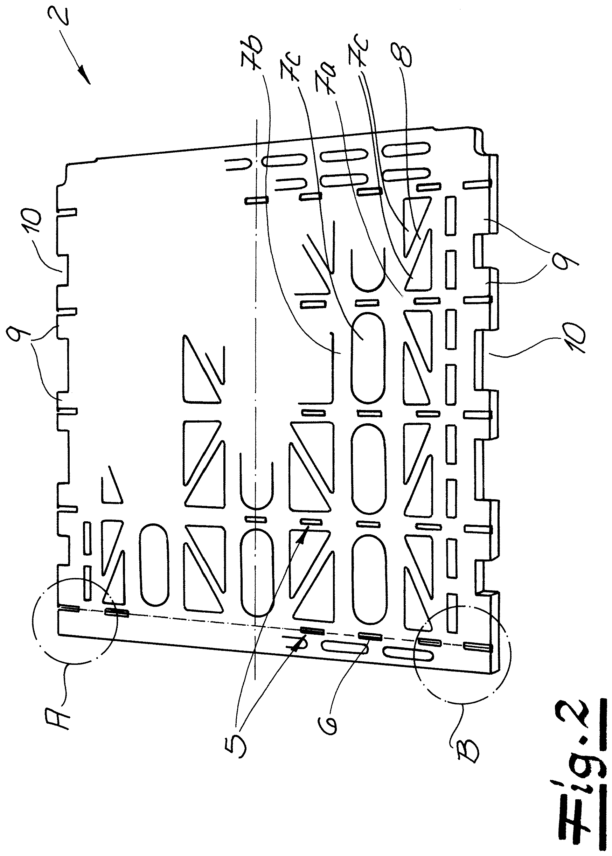

Der Detailaufbau des Einlegebodens 2 erschließt sich anhand der Einzeldarstellungen in den Fig. 2 bis 4. Zunächst einmal handelt es sich bei dem Einlegeboden 2 bzw. Kunststoffboden um einen solchen, welcher im Zuge eines Spritzvorganges aus einem thermoplastischen Kunststoff hergestellt wird. Als geeigneter Kunststoff hat sich nicht einschränkend Polyethylen bzw. PE bewährt. Damit der fragliche Kunststoffboden bzw. Einlegeboden 2 die von einem solchen Rollcontainer bzw. Rollwagen 1 aufgenommenen Lasten einwandfrei und ohne Beschädigungen aufnehmen kann, ist der fragliche Kunststoffboden mit zumindest einem Steckkanal 5 ausgerüstet, welcher zur Führung und Halterung einer wahlweise aufnehmbaren Verstärkungsschiene 6 dient und eingerichtet ist. Bei der Verstärkungsschiene 6 handelt es sich im Ausführungsbeispiel und nicht einschränkend um eine Flachstahlstange. Das heißt, die Verstärkungsschiene 6 ist flach und streifenförmig aus Stahl hergestellt. Selbstverständlich können an dieser Stelle auch andere Materialien für die Realisierung der Verstärkungsschiene 6 genutzt werden. So ist es denkbar, dass die Verstärkungsschiene 6 ebenfalls aus Kunststoff besteht, beispielsweise aus Kunststoff mit eingelagerten Glasfasern zur Verstärkung. Auch andere Metalle als Stahl können zur Realisierung der Verstärkungsschiene 6 herangezogen werden.

Im Rahmen des Ausführungsbeispiels sind mehrere Steckkanäle 5 zur jeweils wahlweisen Aufnahme einer zugehörigen Verstärkungsschiene 6 vorgesehen. Tatsächlich setzt sich der Kunststoffboden bzw. Einlegeboden 2 ausweislich der Fig. 2 aus einerseits Laschenstreben 7a und andererseits Verstärkungsstreben 7b zusammen. Die Laschenstreben 7a und Verstärkungsstreben 7b formen insgesamt ein Gitter und sind dazu jeweils rechtwinklig zueinander angeordnet. Außerdem schließen die Laschenstreben 7a und die Verstärkungsstreben 7b jeweils Öffnungen 7c zwischen sich ein, die im Rahmen des Ausführungsbeispiels einerseits oval und andererseits rechteckförmig mit Diagonalstreben 8 ausgelegt sind. Auf diese Weise lässt sich der Kunststoffboden bzw. Einlegeboden 2 unter Rückgriff auf ein Minimum an Werkstoffen herstellen und verfügt darüber hinaus über ein geringes Gewicht.

Die Laschenstreben 7a verbinden jeweils sich gegenüberliegende Laschen 9. Tatsächlich verfügt der Einlegeboden 2 randseitig über die fraglichen Laschen bzw. Traglaschen 9 sowie Einformungen 10. Die Traglaschen 9 und die Einformungen 10 wechseln sich jeweils ab. Mit Hilfe der Traglaschen 9 stützt sich der Einlegeboden 2 als Zwischenboden auf den Querstreben 4 des Bodentraggestells 3 ab, wie sie in der Fig. 1 gezeigt sind. Die Einformungen 10 nehmen demgegenüber eine ober mehrere Vertikalstreben der zugehörigen Seitenwand 3a auf.

Die Laschenstreben 7a erstrecken sich jeweils von einer Lasche 9 an einem Rand des Kunststoffbodens bzw. Einlegebodens 2 bis zur Lasche 9 am gegenüberliegenden Rand. Außerdem erkennt man anhand der Fig. 2, dass jede Laschenstrebe 7a mit einem Steckkanal 5 zur wahlweisen Aufnahme der zugehörigen Verstärkungsschiene 6 ausgerüstet ist. Dadurch erfahren die hauptsächlich Kräfte übernehmenden und in das Bodentraggestell 3 einleitenden Laschen 9 eine Verstärkung in Gestalt der Steckkanäle 5 mit den darin wahlweise aufgenommenen Verstärkungsschienen 6.

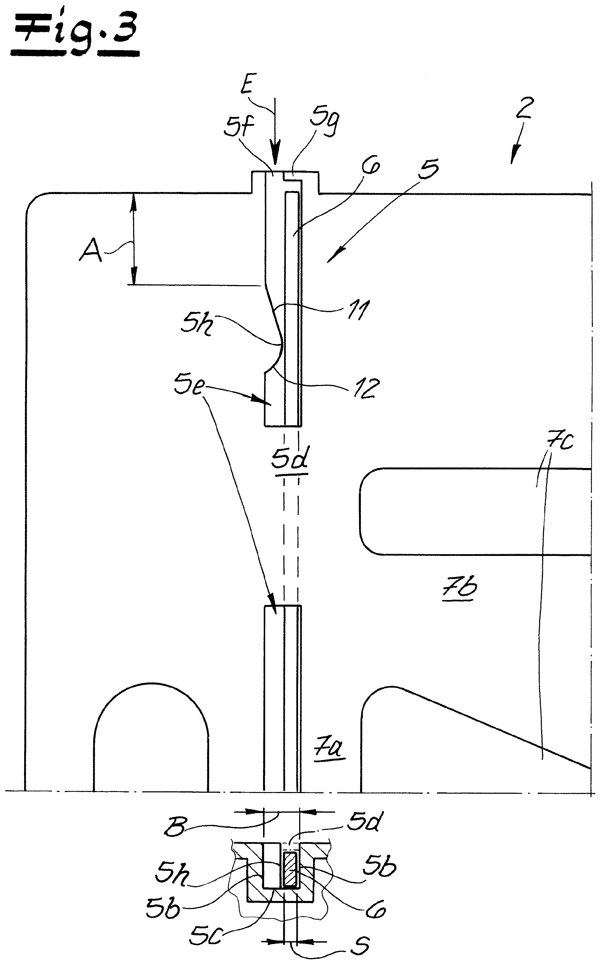

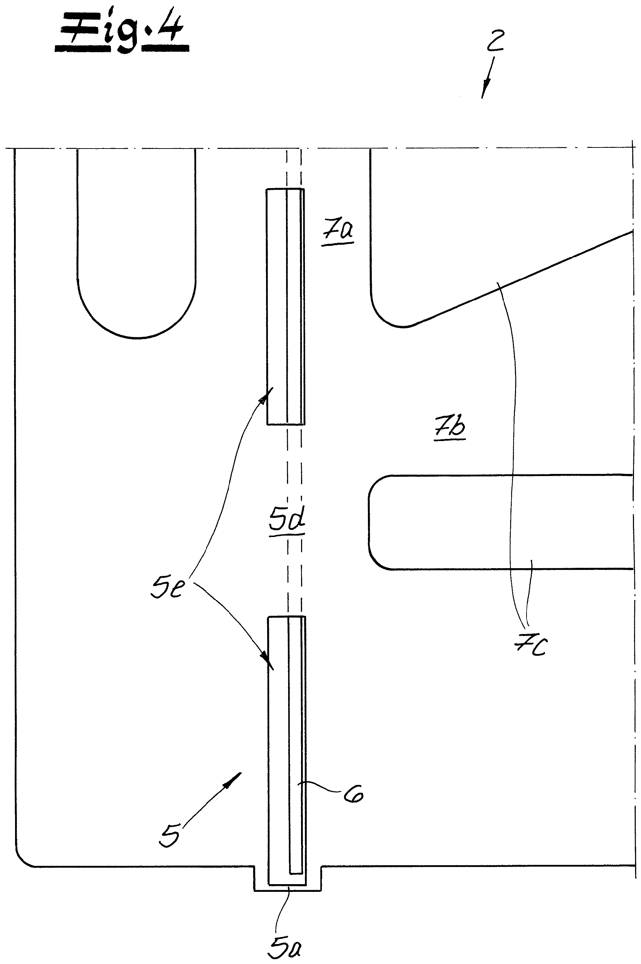

Anhand einer vergleichenden Betrachtung der Fig. 3 und 4 erkennt man, dass der jeweilige Steckkanal 5 einseitig geschlossen ausgebildet ist. Tatsächlich verfügt der betreffende Steckkanal 5 an seinem einen Ende über eine Endwand 5a. Außerdem wird anhand der schematischen Schnittdarstellung deutlich, dass der betreffende Steckkanal 5 insgesamt U-förmig mit zwei sich gegenüberliegenden U-Schenkeln 5b und einer unterseitigen U-Basis 5c ausgebildet ist. Auf diese Weise ist der fragliche Steckkanal 5 in Richtung auf die Oberseite des Einlegebodens 2 offen gestaltet. Dadurch kann ein Benutzer unschwer erkennen, ob der betreffende Steckkanal 5 mit einer eingeschobenen Verstärkungsschiene 6 ausgerüstet ist oder nicht.

Damit die Verstärkungsschiene 6 nicht nach oben aus dem nach oben hin offenen Steckkanal 5 herausrutschen oder herausfallen kann, sind dem jeweiligen Steckkanal 5 jeweils Brückenstege 5d zugeordnet. Die Brückenstege 5d verbinden die beiden U-Schenkel 5b des U-förmigen Steckkanals 5 oberseitig. Außerdem sind die Brückenstege 5d nicht durchgängig gestaltet, sondern lassen jeweils Freibereiche 5e unabgedeckt, durch welche hindurch ein Bediener die Verstärkungsschiene 6 im Innern des Steckkanals 5 und deren Vorhandensein überprüfen kann. Anhand der Fig. 3 in Verbindung mit der Fig. 2 erkennt man, dass sich die Brückenstege 5d und die Freibereiche 5e jeweils abwechseln. Außerdem ist die Auslegung so getroffen, dass die Brückenstege 5d in Verlängerung der Verstärkungsstreben 7b angeordnet sind, welche zusammen mit den Laschenstreben 7a die bereits besprochenen Öffnungen 7c umschließen.

Der Steckkanal 5 verfügt an seinem einen Ende über die bereits beschriebene Endwand 5a. An seinem anderen Ende ist eine Einführöffnung 5f vorgesehen. Die Einführöffnung 5f ist ausweislich der Fig. 3 benachbart zu einem Endanschlag 5g des Steckkanals 5 angeordnet. Mit Hilfe des Endanschlages 5g wird die im Steckkanal 5 aufgenommene Verstärkungsschiene 6 gehalten. Schließlich gehört zum grundsätzlichen Aufbau zumindest noch ein Klemmvorsprung 5h im Innern des Steckkanals 5. Nach dem Ausführungsbeispiel ist lediglich ein (einziger) Klemmvorsprung 5h im Innern des Steckkanals 5 für die Verstärkungsschiene 6 vorgesehen. Grundsätzlich können natürlich auch mehrere Klemmvorsprünge 5h über die Länge des Steckkanals 5 gesehen angeordnet werden. Im Ausführungsbeispiel und nicht einschränkend ist der Klemmvorsprung 5h im Bereich oder in der Nähe der Einführöffnung 5f für die Verstärkungsschiene 6 im Innern des Steckkanals 5 platziert.

Wie bereits erläutert, ist der jeweilige Steckkanal 5 einseitig mit Hilfe der Endwand 5a geschlossen. Außerdem verfügt der Steckkanal 5 über die Einführöffnung 5f sowie den in Einführrichtung E der Verstärkungsschiene 6 angeordneten Klemmvorsprung 5h für die Verstärkungsschiene 6. Sofern mehrere Klemmvorsprünge 5h über die Länge des Steckkanals 5 verteilt realisiert sind, sind diese sämtlichen Klemmvorsprünge 5h in der betreffenden Einführrichtung E der Verstärkungsschiene 6 platziert. Die Einführrichtung E ist primär in der Fig. 3 dargestellt und eingezeichnet und korrespondiert zur Steckrichtung, in welcher die Verstärkungsschiene 6 durch die Einführöffnung 5f in den Stecckanal 5 eingeschoben bzw. eingeführt werden muss.

Bei diesem Vorgang trifft die Verstärkungsschiene 6 nach einem bestimmten Steckweg A auf den einzigen bzw. den ersten der mehreren Klemmvorsprünge 5h bzw. eine Auflaufschräge 11 an dem betreffenden Klemmvorsprung 5h. Die Auflaufschräge 11 findet sich an der in Steckrichtung E angeordneten Vorderseite des Klemmvorsprunges 5h. Demgegenüber ist die Rückseite des Klemmvorsprunges 5h in der Einführrichtung E bzw. Steckrichtung der Verstärkungsschiene 6 mit einer Kontur 12 ausgerüstet, die als Bogenkontur ausgebildet ist.

Jedenfalls wird die Verstärkungsschiene 6 durch die Einführöffnung 5f in den Steckkanal 5 in der Einführrichtung E eingeschoben. Nach Absolvieren des Steckweges A trifft die Verstärkungsschiene 6 auf den Klemmvorsprung 5h bzw. dessen Auflaufschräge 11. Dadurch wird die Verstärkungsschiene 6 umgelenkt und elastisch verbogen, bis sie den dem Klemmvorsprung 5h gegenüberliegenden U-Schenkel 5b des Steckkanals 5 erreicht und hieran entlanggleitet. Denn der Klemmvorsprung 5h verengt den Steckkanal 5 in etwa hälftig. Das heißt, der Steckkanal 5 verfügt über eine lichte Breite B, welche in etwa dem doppelten einer Materialstärke S der Verstärkungsschiene 6 entspricht. Grundsätzlich kann die Breite B auch etwas größer als das Doppelte der Materialstärke S gestaltet sein. Es gilt folglich:
B ≈ 2S.

Da darüber hinaus der Klemmvorsprung 5h den Steckkanal 5 hälftig verengt, korrespondiert dies dazu, dass der Klemmvorsprung 5h in etwa bis zur Hälfte der Breite B des Steckkanals in diesen hineinreicht. Dadurch verbleibt zwischen dem Klemmvorsprung 5h und dem gegenüberliegenden U-Schenkel 5b des Steckkanals 5 ein Durchgang, welcher in etwa der Materialstärke S der Verstärkungsschiene 6 von seiner Breite her entspricht. Die Einführöffnung 5f verfügt ebenfalls über eine an die Materialstärke S der Verstärkungsschiene 6 angepasste Breite. Vergleichbares gilt für den Endanschlag 5g, der benachbart zu der Einführöffnung 5f angeordnet ist und der Endwand 5a des Steckkanals 5 gegenüberliegt. Dadurch überdecken sich der eine bzw. die mehreren Klemmvorsprünge 5h und die Einführöffnung 5f beim Blick in die Einführöffnung 5f in der Einführrichtung E wenigstens größtenteils.

Wenn nun die Verstärkungsschiene 6 in der Steckrichtung bzw. Einführrichtung E durch die Einführöffnung 5f in den Steckkanal 5 eintaucht, trifft das in der Steckrichtung bzw. Einführrichtung E vordere Ende der Verstärkungsschiene 6 nach Absolvieren des Steckweges A auf den einen bzw. den ersten Klemmvorsprung 5h respektive dessen Auflaufschräge 11. Dadurch wird die Verstärkungsschiene 6 in Richtung auf den gegenüberliegenden U-Schenkel 5b elastisch abgelenkt. Da der Klemmvorsprung 5h den Steckkanal 5 hälftig verengt, verbleibt zwischen dem Klemmvorsprung 5h und dem gegenüberliegenden U-Schenkel 5b ein an die Materialstärke S der Verstärkungsschiene 6 angepasster Spalt bzw. Durchgang, so dass die Verstärkungsschiene 6 unter gleichzeitiger geringfügiger sowie elastischer Verformung am Klemmvorsprung 5h entlang gleitend bis hin zur Endwand 5a im Steckkanal 5 vorgeschoben werden kann.

Sobald die Verstärkungsschiene 6 die Endwand 5a erreicht hat, kann das in der Steckrichtung bzw. Einführrichtung E hintere Ende elastisch hinter den Endanschlag 5g für den Steckkanal 5 zurückschnappen, welcher benachbart zu der Einführöffnung 5f angeordnet ist. Auf diese Weise wird die Verstärkungsschiene 6 im Einbauzustand axial zwischen einerseits der Endwand 5a und andererseits dem Endanschlag 5g gesichert und gehalten. Der Klemmvorsprung 5h verhindert, dass die Verstärkungsschiene 6 über die Einführöffnung 5f den Stecckanal 5 wieder verlassen kann.

Um die Verstärkungsschiene 6 aus dem Steckkanal 5 wahlweise wieder zu entfernen, muss die Verstärkungsschiene 6 im Bereich der Einführöffnung 5f elastisch verformt und durch die Einführöffnung 5f hindurch aus dem Stecckanal 5 herausgezogen werden. Bei diesem Vorgang verformt sich die Verstärkungsschiene 6 erneut elastisch, so dass sowohl das Einführen als auch Herausziehen der Verstärkungsschiene 6 jeweils nur mit Kraftanwendung möglich ist. Das ist ausdrücklich gewollt, um ein unbeabsichtigtes Herausrutschen der Verstärkungsschiene 6 aus dem Steckkanal 5 zu verhindern. Außerdem gelingt diese Auslegung, ohne dass den Steckkanal 5 endseitig verschließende und zusätzliche Klipse erforderlich sind, wie sie der Stand der Technik bisher lehrt.

## Patentansprüche

1. Kunststoffboden für Rollwagen (1), insbesondere Einlegeboden (2) für Rollcontainer mit Bodentraggestell (3), mit zumindest einem Steckkanal (5) zur Führung und Halterung einer wahlweise aufnehmbaren Verstärkungsschiene (6), wobei der Steckkanal (5) einseitig geschlossen mit einer Einführöffnung (5f) sowie zumindest einem in Einführrichtung (E) der Verstärkungsschiene (6) angeordneten Klemmvorsprung (5h) für die Verstärkungsschiene (6) ausgebildet ist,
**dadurch gekennzeichnet, dass**
die Einführöffnung (5f) benachbart zu einem Endanschlag (5g) für die im Steckkanal (5) aufgenommene Verstärkungsschiene (6) angeordnet ist.

2. Kunststoffboden nach Anspruch 1, **dadurch gekennzeichnet, dass** randseitig Traglaschen (9) sowie Einformungen (10) vorgesehen sind, wobei die Traglaschen (9) jeweils in kanalseitiger Verlängerung des zugehörigen Steckkanals (5) angeordnet sind.

3. Kunststoffboden nach Anspruch 2, **dadurch gekennzeichnet, dass** die Einformungen (10) zur Aufnahme von Vertikalstreben beispielsweise des Bodentraggestells (3) ausgelegt sind.

4. Kunststoffboden nach einem der Ansprüche 1 bis 3, **dadurch gekennzeichnet, dass** sich der Steckkanal (5) und die Verstärkungsschiene (6) im Wesentlichen zwischen zwei sich gegenüberliegenden Rändern erstrecken.

5. Kunststoffboden nach einem der Ansprüche 1 bis 4, **dadurch gekennzeichnet, dass** der Steckkanal (5) eine Breite (B) aufweist, welche eine Materialstärke (S) der Verstärkungsschiene (6) übersteigt.

6. Kunststoffboden nach Anspruch 5, **dadurch gekennzeichnet, dass** die Breite (B) des Steckkanals (5) in etwa dem Doppelten oder geringfügig mehr der Materialstärke (S) der Verstärkungsschiene (6) entspricht.

7. Kunststoffboden nach einem der Ansprüche 1 bis 6, **dadurch gekennzeichnet, dass** die Einführöffnung (5f) eine an die Materialstärke (S) der Verstärkungsschiene (6) angepasste Breite aufweist.

8. Kunststoffboden nach einem der Ansprüche 1 bis 7, **dadurch gekennzeichnet, dass** sich der Klemmvorsprung (5h) und die Einführöffnung (5f) beim Blick in die Einführrichtung (E) wenigstens größtenteils überdecken.

9. Kunststoffboden nach einem der Ansprüche 1 bis 7, **dadurch gekennzeichnet, dass** der Klemmvorsprung (5h) den Steckkanal (5) in etwa hälftig verengt.

10. Kunststoffboden nach einem der Ansprüche 1 bis 9, **dadurch gekennzeichnet, dass** der Steckkanal (5) im Querschnitt U-förmig mit zwei U-Schenkeln (5b) und unterseitiger U-Basis (5c) ausgebildet ist.

11. Kunststoffboden nach Anspruch 10, **dadurch gekennzeichnet, dass** der Steckkanal (5) im Querschnitt U-förmig mit zwei U-Schenkel (5b) und unterseitiger U-Basis (5c) ausgebildet ist.

12. Kunststoffboden nach Anspruch 11, **dadurch gekennzeichnet, dass** die Brückenstege (5d) in Verlängerung von Verstärkungsstreben (7b) angeordnet sind, welche zusammen mit Laschenstreben (7a) jeweils Öffnungen (7c) umschließen.

13. Kunststoffboden nach Anspruch 1 bis 12, **dadurch gekennzeichnet, dass** er als Spritzgießteil ausgebildet ist.

14. Kunststoffboden nach einem der Ansprüche 1 bis 13, **dadurch gekennzeichnet, dass** zu seiner Herstellung ein thermoplastischer Kunststoff wie beispielsweise PE oder PP eingesetzt wird.

## Claims

1. A plastic shelf for trolleys (1), in particular an insertable shelf (2) for wheeled containers with a shelf-supporting frame (3), having at least one insertion channel (5) for guiding and holding a reinforcement rail (6) which can be accommodated as desired, the insertion channel (5) being closed on one side and having an insertion opening (5f) and at least one clamping protrusion (5h) for the reinforcement rail (6), arranged in the insertion direction (E) of the reinforcement rail (6),
**characterised in that**
the insertion opening (5f) is arranged adjacently to an end stop (5g) for the reinforcement rail (6) accommodated in the insertion channel (5).

2. The plastic shelf according to Claim 1, **characterised in that** supporting lugs (9) and indentations (10) are provided at the edge, wherein the supporting lugs (9) are each arranged in the channel-side extension of the associated insertion channel (5).

3. The plastic shelf according to Claim 2, **characterised in that** the indentations (10) are designed to receive vertical struts, for example of the shelf-supporting frame (3).

4. The plastic shelf according to any one of Claims 1 to 3, **characterised in that** the insertion channel (5) and the reinforcement rail (6) extend substantially between two mutually opposing edges.

5. The plastic shelf according to any one of Claims 1 to 4, **characterised in that** the insertion channel (5) has a width (B) which exceeds a material thickness (S) of the reinforcement rail (6).

6. The plastic shelf according to Claim 5, **characterised in that** the width (B) of the insertion channel (5) corresponds approximately to twice or slightly more than twice the material thickness (S) of the reinforcement rail (6).

7. The plastic shelf according to any one of Claims 1 to 6, **characterised in that** the insertion opening (5f) has a width which matches the material thickness (S) of the reinforcement rail (6).

8. The plastic shelf according to any one of Claims 1 to 7, **characterised in that** the clamping protrusion (5h) and the insertion opening (5f) at least largely overlap when viewed in the insertion direction (E).

9. The plastic shelf according to any one of Claims 1 to 7, **characterised in that** the clamping protrusion (5h) narrows the insertion channel (5) by approximately half.

10. The plastic shelf according to any one of Claims 1 to 9, **characterised in that** the insertion channel (5) has a U-shaped cross-section with two U sides (5b) and a U base (5c) at the bottom.

11. The plastic shelf according to Claim 10, **characterised in that** the insertion channel (5) has a U-shaped cross-section with two U sides (5b) and a U base (5c) at the bottom.

12. The plastic shelf according to Claim 11, **characterised in that** the bridges (5d) are arranged in the extension of reinforcing struts (7b) which each enclose openings (7c) together with lug struts (7a).

13. The plastic shelf according to Claims 1 to 12, **characterised in that** it is in the form of an injection-moulded part.

14. The plastic shelf according to any one of Claims 1 to 13, **characterised in that** a thermoplastic such as PE or PP is used for the production thereof.

## Revendications

1. Fond inférieur en matière plastique pour des chariots roulants (1), notamment tablette (2) pour des conteneurs roulants, pourvu d'un châssis porteur (3), doté d'au moins un canal d'emboîtage (5) destiné à guider et à maintenir une glissière de renfort (6) pouvant être logée sélectivement, le canal d'emboîtage (5) étant conçu en étant fermé unilatéralement avec un orifice d'introduction (5f) ainsi qu'au moins une saillie de serrage (5h) pour la glissière de renfort (6) placée dans la direction d'introduction (E) de la glissière de renfort (6),
**caractérisé en ce que**
l'orifice d'introduction (5f) est placé au voisinage d'une butée d'extrémité (5g) pour la glissière de renfort (6) logée dans le canal d'emboîtage (5).

2. Fond inférieur en matière plastique selon la revendication 1, **caractérisé en ce que** sur le côté du bord sont prévues des pattes porteuses (9), ainsi que des moulures (10), les pattes porteuses (9) étant placées respectivement dans un prolongement côté canal du canal d'emboîtage (5) associé.

3. Fond inférieur en matière plastique selon la revendication 2, **caractérisé en ce que** les moulures (10) sont conçues pour recevoir des entretoises verticales par exemple du châssis porteur (3).

4. Fond inférieur en matière plastique selon l'une quelconque des revendications 1 à 3, **caractérisé en ce que** le canal d'emboîtage (5) et la glissière de renfort (6) s'étendent sensiblement entre deux bords mutuellement opposés.

5. Fond inférieur en matière plastique selon l'une quelconque des revendications 1 à 4, **caractérisé en ce que** le canal d'emboîtage (5) présente une largeur (B) qui est supérieure à une épaisseur de matière (S) de la glissière de renfort (6).

6. Fond inférieur en matière plastique selon la revendication 5, **caractérisé en ce que** la largeur (B) du canal d'emboîtage (5) correspond approximativement au double ou à légèrement plus de l'épaisseur de matière (S) de la glissière de renfort (6).

7. Fond inférieur en matière plastique selon l'une quelconque des revendications 1 à 6, **caractérisé en ce que** l'orifice d'introduction (5f) présente une largeur adaptée à l'épaisseur de matière (S) de la glissière de renfort (6).

8. Fond inférieur en matière plastique selon l'une quelconque des revendications 1 à 7, **caractérisé en ce qu'**en visée dans la direction d'introduction (E), la saillie de serrage (5h) et l'orifice d'introduction (5f) se recouvrent au moins en majeure partie.

9. Fond inférieur en matière plastique selon l'une quelconque des revendications 1 à 7, **caractérisé en ce que** la saillie de serrage (5h) rétrécit le canal d'emboîtage (5) au moins de moitié.

10. Fond inférieur en matière plastique selon l'une quelconque des revendications 1 à 9, **caractérisé en ce que** le canal d'emboîtage (5) est conçu avec une section transversale en forme de U, avec deux branches de U (5b) et la base du U (5c) sur la face inférieure.

11. Fond inférieur en matière plastique selon la revendication 10, **caractérisé en ce que** le canal d'emboîtage (5) est conçu avec une section transversale en forme de U, avec deux branches de U (5b) et la base du U (5c) sur la face inférieure.

12. Fond inférieur en matière plastique selon la revendication 11, **caractérisé en ce que** les pontets (5d) sont placés dans le prolongement d'entretoises de renfort (7b), lesquelles conjointement avec des entretoises de pattes (7a) entourent respectivement des orifices (7c).

13. Fond inférieur en matière plastique selon la revendication 1 à 12, **caractérisé en ce qu'**il est conçu sous la forme d'une pièce moulée par injection.

14. Fond inférieur en matière plastique selon l'une quelconque des revendications 1 à 13, **caractérisé en ce que** pour sa fabrication, on met en œuvre une matière thermoplastique, comme par exemple le PE ou le PP.
